# EUROPÄISCHE PATENTSCHRIFT

(11) **EP 2 445 697 B1**
(45) Veröffentlichungstag und Bekanntmachung des Hinweises auf die Patenterteilung: **23.03.2016**
(21) Anmeldenummer: 10723144.1
(22) Anmeldetag: 14.06.2010
(51) Int. Cl.: B29C 49/18, B29C 45/72, B29C 49/06, B29C 49/64, B29C 49/42

(54) **VERFAHREN UND VORRICHTUNG ZUR HERSTELLUNG VON PREFORMEN MIT SPEZIALGEOMETRIEN**
METHOD AND DEVICE FOR PRODUCING PREFORMS WITH SPECIAL GEOMETRIES
PROCÉDÉ ET DISPOSITIF DE PRODUCTION DE PRÉFORMES D'UNE GÉOMÉTRIE PARTICULIÈRE

(30) Priorität: 27.06.2009 DE 102009030762
(43) Veröffentlichungstag der Anmeldung: 02.05.2012
(60) Teilanmeldung: 12178952.3
(73) Patentinhaber: Netstal-Maschinen AG, 8752 Näfels (CH)
(72) Erfinder: BOCK, Stefan, CH-8750 Glarus (CH); SCHEUNEMANN, Britta, CH-8750 Glarus (CH)
(74) Vertreter: Wilhelm, Ludwig
(86) Internationale Anmeldenummer: PCT/EP2010/058319
(87) Internationale Veröffentlichungsnummer: WO 2010/149522

(56) Entgegenhaltungen:
- EP-A1- 1 488 911
- FR-A1- 2 337 025
- JP-A- 4 062 028
- JP-A- 4 126 206
- JP-A- S59 002 818

## Beschreibung

Die vorliegende Erfindung betrifft eine Verfahren und eine Vorrichtung zur Herstellung von Preformen gemäß dem Oberbegriff der Ansprüche 1 bzw. 13 (WO 2008/000108 A1).

Bei der Herstellung von Kunststoffflaschen ist es üblich, zunächst einen sogenannten Vorformling oder Preform herzustellen, der in einem nachfolgenden Schritt durch ein Blasformverfahren zu einer fertigen Kunststoffflasche aufgeblasen wird.

Bei der Preformherstellung wird herkömmlicherweise zunächst ein Kunststoffmaterial (z. B. Kunststoffgranulat) aufgeschmolzen und in die Kavitäten eines geschlossenen Spritzgießwerkzeuges eingebracht. Ein solches Spritzgießwerkzeug besitzt in der Regel eine Vielzahl von gleichen Kavitäten, welche auch als Formnester bezeichnet werden.

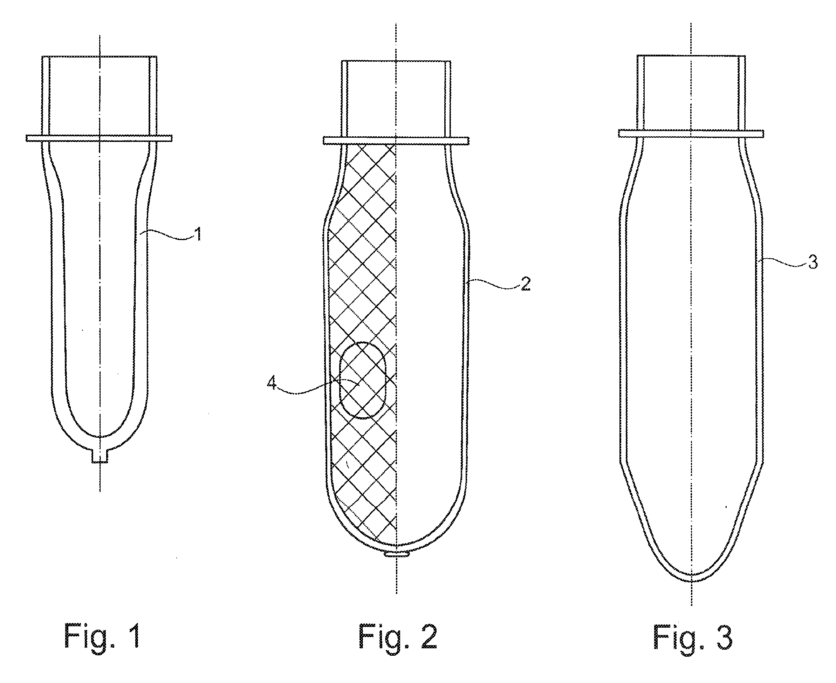

Um die Preform-Geometrie gemäß Fig 1 auszubilden, umfassen die Formnester neben einem sogenannten Neck- oder Halsbereich eine Kavitätsausnehmung, in die ein Kern hineinragt. Der Kern definiert den Innenraum des Preforms, die Kavitätsausnehmung zusammen mit dem Neck- oder Halsbereich die Außenkontur des Preforms-zusammen legen sie also die Geometrie des Preforms fest.

Nach dem Einspritzen der Kunststoffschmelze in die Mehrfachkavitäten wird ein erster Kühlvorgang durchgeführt, um eine ausreichende Steifheit für die Preformen zu erlangen, die eine Öffnung des Spritzgießwerkzeuges ermöglicht. Nach dem Öffnen des Spritzgießwerkzeuges wird die hergestellte Charge von Preforms herkömmlicherweise mit einem Entnahmegreifer aus dem Werkzeug entnommen, wobei hierzu bei bekannten Verfahren jeder Preform in eine zugeordnete, zumeist gekühlte Entnahmehülse eines Entnahmegreifers überführt wird.

Nach dem Entnehmen der Preformen aus dem Spritzgießwerkzeug ist es bekannt, die Preformen mittels eines Transfergreifers aus dem Entnahmegreifer in eine weitere Nachkühleinrichtung umzusetzen. Nach einem ausreichenden Abkühlen der Preformen in dieser Nachkühleinrichtung werden diese dann entweder unmittelbar einer Blasform-Anlage zugeführt oder zum Aufbewahren und Transportieren in einen Karton verpackt.

Für eine hohe Effizienz der Anlage ist es wichtig, die Zykluszeit möglichst kurz zu halten, um möglichst viele Preformen herstellen zu können. Einer weiteren Verkürzung der Zykluszeit steht aber entgegen, dass eine erhebliche Wärme jeweils aus den Preformen abgeführt werden muss, um sie nachhaltig auf ein für die Verpackung akzeptables Temperaturniveau zu bringen.

Dies geschieht zum einen bereits im Spritzgießwerkzeug selbst, wo eine sehr aggressive Kühlung sowohl über dem Kern wie auch über die Kavitätseinrichtung vorgesehen ist. Auch die Entnahmehülsen des Entnahmegreifers sind in der Regel (wasser-) gekühlt.

Zudem wurde unter dem Markennamen "Calitec" der Firma Netstal ein Verfahren eingeführt, bei dem der Innenraum der Preformen, die sich im Entnahmegreifer befinden, unter Druck gesetzt werden, so dass sich diese mit ihrer Außenwandung innig an der Wandung des Entnahmegreifers anlagern und eine besonders gute Kühlung sowie auch eine Rekalibrierung sichergestellt wird. Zu diesem Zweck weisen die Transferpins des Transfergreifers Einrichtungen zum Abdichten des Innenraums der Preformen sowie zum Einbringen eines Fluids, beispielsweise von Luft, auf.

Bei dem vorgenannt beschriebenen Ablauf ist es üblich, einen Preform mit einem Design zu generieren, wie er in Fig. 1 dargestellt ist. Die Art des Designs ergibt sich in der Regel daraus, dass bei der Entnahme der Preformen aus dem Spritzgießwerkzeug zum einen der Kern aus dem Innenraum des Preforms herausgezogen werden muss und zum anderen der Preform selbst aus der Kavität entnommen werden muss. Diese beiden Vorgänge würden bei einer Preform-Geometrie, wie sie in Fig. 2 dargestellt ist, nicht unmittelbar und ohne weiteres vorgenommen werden können. Zumindest ein einteilig ausgebildeter Kern könnte in der Regel nicht aus dem Innenraum herausgezogen werden.

Auf der anderen Seite haben Preform-Geometrien, wie sie in den Figuren 2, 3 und 8 gezeigt sind, einige Vorteile, die nachfolgend noch erläutert werden.

Aus diesem Grunde ist es Aufgabe der vorliegenden Erfindung, ein Verfahren und eine Vorrichtung anzugeben, mit denen sich Preformen mit einer Spezialgeometrie, z.B. einem Hinterschnitt - insbesondere im Schulterbereich - oder einer Ausweitung im Bodenbereich erzeugen lassen, wobei der fertig gestellte Preform einen Halsbereich mit einem Gewinde oder einer anderen Verschlussvorrichtung aufweist und sich an den Halsbereich ein Preformkörper mit einem gegenüber der Kavität im Spritzgießwerkzeug größeren bzw. aufgeweiteten Preformkörper anschließt.

Diese Aufgabe wird durch die in den Ansprüchen 1 und 14 genannten Merkmale verfahrens- bzw. vorrichtungsmäßig gelöst.

Ein Kerngedanke der Erfindung ist darin zu sehen, dass die aus dem Werkzeug entnommenen Preformen in der Entnahmeeinrichtung temperaturmäßig zunächst konditioniert werden, d.h. auf ein bestimmtes Temperaturniveau gebracht werden, welches zum einen die Kristallisierungsgefahr bereits signifikant reduziert, zum anderen aber eine weitere Verformung des Preforms ermöglicht. Im Gegensatz zu den bisherigen Systemen wird für einen nachfolgenden Blasvorgang evtl. nicht so stark wie möglich abgekühlt, um einen bereits möglichst verfestigten Preform zu erhalten.

Dabei können während der Konditionierung die Transferpins eingesetzt werden, um den Innenraum abzudichten und unter Druck zu setzen, so dass eine optimale Kontaktierung der Hülsenwand und damit Konditionierung und Formgebung sichergestellt ist.

Gemäß einem ersten Aspekt der vorliegenden Erfindung ist es nun bereits möglich, im Entnahmegreifer selbst einen Blasvorgang durchzuführen, und dabei beispielsweise den Boden des Preforms, insbesondere in seiner axialen Erstreckung auszublasen. In diesem Fall müsste die Kavität in den Entnahmehülsen des Entnahmegreifers im Bodenbereich entsprechend vergrößert ausgebildet sein. Der radiale Außenumfang des Preforms würde sich dadurch im wesentlichen nicht verändern, was auch nicht ohne weiteres möglich wäre, da ansonsten der Preform nicht sicher aus dem Spritzgießwerkzeug herausgeführt werden könnte. Mit dieser Vorgehensweise ist es möglich, Preformböden zu formen, wie sie beipielsweise in den WO 2008/041186 A2 angegeben und die für das spätere Streckblasen von Vorteil sind. Mit einem sog. "Capello-Design" können Preformen mit einem dünneren Preformboden gebildet werden, unter anderem mit dem Vorteil einer Materialersparnis sowie einer schnelleren Kühlmöglichkeit. Dies ist insbesondere dann interessant, wenn die spritzgießtechnische Herstellung solcher Konturen Nachteile aufweist.

Nach dieser Konditionierung, die schneller erfolgen kann als die bisherige Kühlung, insbesondere dann wenn nur oder auch in der Nachkühleinrichtung ein Aufblasvorgang stattfindet, weil dann die Preformen nicht zwangsweise auf ein so niedriges Temperaturniveau geführt werden müssen, werden die Preformen mit dem Transfergreifer aus der Entnahmehülse entnommen und in die Nachkühleinrichtung überführt. Die Kavitäten der Nachkühleinrichtung (die auch als Blasformvorrichtung bezeichnet werden kann) sind dabei gegenüber dem im Spritzgießwerkzeug hergestellten Preform derart vergrößert, dass insbesondere die radiale Erstreckung des Innenraums im aufgeblasenen Preform größer ist, als die radiale Erstreckung des Innenraums im Halsbereich des Preforms. Natürlich kann auch eine axiale Aufweitung erfolgen. Damit entsteht ein aufgeweiteter Schulterbereich, der in einer Spritzgießform einen Hinterschnitt darstellen würde und nicht ohne weiteres entformt werden könnte.

Durch kontinuierliches oder nochmaliges Abdichten des Preforminnenraums mit dem Transfergreifer und entsprechender Druckbeaufschlagung des Preforminnenraums mit einem Fluid (beispielsweise Luft), wird der vorher im Entnahmegreifer temperaturmäßig konditionierte Preform nunmehr im Bereich des Preformskörpers aufgeblasen und legt sich an die Wandung der Blasformkavitäten der Nachkühleinrichtung an. Dieses Aufblasen ist jedoch nur ein "Voraufblasen" im Sinne des später herzustellenden fertigen Kunststoffproduktes und wird daher nachfolgend auch als "Preblowing" bezeichnet, da zur ein Zwischenprodukt für eine fertige Kunststoffflasche oder einen fertigen Kunststoffbehälter hergestellt wird. Für die Herstellung einer fertigen Kunststoffflasche oder eines fertigen Kunststoffbehälters bedarf es eines weiteren Blasformschrittes.

Auf die oben angegebenen Weisen können Preformen mit einer Hinterschnittgeometrie, bei der der Durchmesser des Preformkörpers größer ist, als sein Hals- oder Neckbereich, sich sein Schulterbereich also nach außen vergrößert und/oder mit einem Capello-Design hergestellt werden. Dabei kann entweder in der Entnahmehülse oder in der Nachkühleinrichtung oder in beiden Einrichtungen ein Blasformvorgang durchgeführt werden.

Ein solcher Preform bietet eine Vielzahl von Vorteilen. Durch das Aufblasen der Preforms vergrößert sich insgesamt der Preformkörper, wodurch bei einem späteren Blasformschritt mehr Infrarotlicht einer Blasformmaschine absorbiert werden kann, mit denen der Preform zum Blasformen wieder aufgeheizt wird. Dies führt zu signifikanten Energieeinsparungen und geringeren Investitionskosten an der Blasformmaschine bzw. beim Betrieb derselben. Weiterhin verkleinert sich durch das Aufblasen des Preforms die Wandstärke, wie in den Figuren 1 - 3 erkennbar ist. Der ursprünglich hergestellte Preform weist eine dickere Wandstärke 1 auf, wohingegen die Preform-Geometrien mit Hinterschnitt dünnere Wandstärken 2 und 3 besitzen. Damit kann der Preform deutlich schneller und genauer auf die optimale Streckblastemperatur gebracht werden, als dies bisher möglich ist. Auch hier kann mit einer zusätzlichen Energieeinsparung und geringeren Investitionskosten bei der Blasformmaschine gerechnet werden. Zudem kann man je nach Preform-Geometrie evtl. Kunststoffmaterial einsparen.

Ferner ist es möglich, den Preform in der Nachkühleinrichtung mit einer Oberflächenstruktur zu versehen, wodurch die Gesamtoberfläche des Preforms auf seiner Außenseite stark vergrößert wird, so dass wiederum mehr Energie absorbiert werden kann. Dies würden die beiden vorgenannten Effekte nochmals verstärken. Die Oberflächenstruktur würde sich dann beim Streckvorgang des späteren Blasformens wieder verlieren.

Die Preform-Geometrie bietet aber nicht nur Vorteile für den späteren Blasformprozess; sie hat auch Vorteile für den eigenen Herstellprozess. Aufgrund der dünneren Wand der Preformen in den gekühlten Blasform- bzw. Nachkühleinrichtungen lässt sich auch hier die Kühlzeit insgesamt verringern, was zu kürzeren Zykluszeiten beiträgt. Dies führt vorteilhafterweise auch dazu, dass sich die Gefahr des Kristallisierens gegenüber Preforms mit dicken Wandstärken deutlich reduziert. Auch lässt sich aufgrund der Konditionierung anstelle der bisherigen starken Kühlung die Verweilzeit im Entnahmegreifer reduzieren.

Weitere Vorteile und Merkmale der Erfindung sind in den Unteransprüchen definiert.

So sollte die als Blasformeinrichtung wirkende Nachkühleinrichtung vorzugsweise wassergekühlt werden. Je aggressiver diese Kühlung ist, desto besser. Entsprechend der Aggressivität der Kühlung verringert sich die Zykluszeit wie auch die Gefahr des Kristallisierens der Preformen.

Im Entnahmegreifer hingegen sollte der Preform vorzugsweise auf eine Temperatur konditioniert werden, die für einen späteren Blasformvorgang günstig ist. Ein solcher Temperaturbereich liegt beispielsweise zwischen 90 und 150° C. Dies ist natürlich nur dann notwendig, wenn ein anschließender Blasformvorgang erfolgt. Ohne einen solchen Blasformvorgang in der Nachkühleinrichtung kann auch wieder sehr aggressiv gekühlt werden.

Eine signifikante Verformung des Hals- oder Neckbereiches des Preforms ist bei keinem dieser Schritte beabsichtigt. Um eine solche Verformung beispielsweise während des Abdicht- oder Überdruckschrittes zu vermeiden, wird der Preform vorzugsweise zumindest während der Ausbildung des Überdrucks im Halsbereich bzw. zumindest in Teilen des Halsbereiches von außen abgestützt. Diese Abstützeinrichtung kann in Form von einer zwei- oder mehrteilig öffen- und schließbaren Backeneinrichtung ausgebildet sein, die jeweils im Bereich jeden Transferpins des Transfergreifers angeordnet werden.

Die Backeneinrichtungen sind vorzugsweise so ausgebildet, dass sie sich mit der als Blasformeinrichtung dienenden Nachkühleinrichtung derart kombinieren und/oder koppeln lassen, dass der aufgeblasene Preform während des Blasschrittes vollumfänglich bis in seinen Halsbereich abgestützt ist. Gemäß einer vorteilhaften Ausführungsform der Erfindung, können die Backeneinrichtungen ebenfalls gekühlt, insbesondere wassergekühlt sein.

Das Konditionieren wird insbesondere dann noch unterstützt bzw. beschleunigt, wenn auch während der Aufnahme des Preforms in einer Entnahmehülse dessen Innenraum zumindest zeitweise unter Druck gesetzt wird (auch wenn in der Entnahmehülse kein Blasformvorgang stattfindet). Ein solcher Überdruck kann im Bereich von 0,5 - 8 bar gehalten werden.

Da die Entnahme aus der Entnahmeeinrichtung bzw. dem Entnahmegreifer recht schnell passieren kann - und zwar aufgrund der anstelle der bisherigen Kühlung nun anstehenden Konditionierung der Preforms auf beispielsweise 120° sowie der größeren dimensionsmäßigen Ausdehnung der Preforms - kann es notwendig sein, zwei oder mehrere Nachkühleinrichtungen vorzusehen, in welche die Preforms aus dem Entnahmegreifer abwechselnd überführt werden können. Die Nachkühleinrichtungen können auch so ausgestaltet sein, dass sie ein Zwei-, Drei- oder Mehrfaches der Charge einer im Spritzgießwerkzeug hergestellten Preformcharge aufnehmen.

Insgesamt lassen sich mit der erfindungsgemäßen Vorrichtung Preformen mit einem Hinterschnitt in einer schnellen Zykluszeit herstellen, wobei diese Geometrie nachfolgend auch Vorteile bei der Weiterverarbeitung in einer Blasformmaschine aufweist. So ergeben sich mehrfache Effizienzsteigerungen sowohl beim eigentlichen Produktionsvorgang des Preforms als auch beim späteren Bearbeitungsschritt.

Die Erfindung wird nachfolgend und mit Bezug auf die beigefügten Zeichnungen näher erläutert. Die Zeichnungen zeigen in
- Fig. 1: eine Querschnittsansicht eines Preforms mit einer herkömmlichen Geometrie, wie er mit einem Spritzgießwerkzeug hergestellt wird,
- Fig. 2: eine Querschnittsansicht eines Preforms mit einer Geometrie mit Hinterschnitt,
- Fig. 3: eine Querschnittsansicht eines Preforms mit einer weiteren Geometrie mit Hinterschnitt und veränderter Bodengeometrie,
- Fig. 4: eine Schnittdarstellung eines in einer Entnahmenahmehülse eines Entnahmegreifers aufgenommenen Preforms mit eingeführtem Transferpin,
- Fig. 5: eine Schnittdarstellung eines in die Kavität einer Nachkühleinrichtung überführten, noch nicht aufgeblasenen Preforms mit eingeführtem Transferpin,
- Fig. 6: eine Schnittdarstellung eines nunmehr in der Nachkühleinrichtung aufgeblasenen Preforms mit Hinterschnitt im Schulterbereich,
- Fig. 7: eine schematische Darstellung mit Schnittzeichnungen von Entnahme- und Blasformvorrichtung, mit der die generelle Arbeitsweise der Vorrichtung beschrieben wird, und
- Fig. 8: eine Ansicht eines Preforms mit einem Capello-Design im Bodenbereich.

Anhand der Zeichnungen soll die Vorgehensweise bei der Herstellung eines Preforms mit einer Hinterschnitt-Preform-Geometrie erläutert werden. Dabei bedeutet "Hinterschnitt", dass sich ein Preform im Bereich seiner Schulterpartie radial aufweitet, so dass der Hinterschnitt gegenüber Kavitätsform des Spritzgießwerkzeugs entsteht.

Zwei solche Hinterschnitt-Geometrien sind in den Figuren 2 und 3 dargestellt, wobei Fig. 3 auch eine Veränderung der Bodenkontur zeigt. Dabei ist nicht nur die Außendimension bzw. der Außendurchmesser des Preforms im Preformkörperbereich größer als im Hals- oder Neckbereich, sondern es ist insbesondere der radiale Durchmesser des Innenraums Durchmesser im Preformkörper größer als der radiale Innenraum im Hals- oder Neckbereich. Diese Geometrie kann nicht ohne weiteres in einer Spritzgießform hergestellt werden. Es müsste zumindest ein Kern verwendet werden, der im Bereich des Preformkörpers radial zusammengezogen werden könnte.

Um mit der herkömmlichen Spritzgießtechnik dennoch einen wie in den Fig. 2 und 3 gezeigten Preform produzieren zu können, wird der Preform zunächst in üblicher Weise in einem Spritzgießwerkzeug hergestellt und nach dem ersten Abkühlen und dem Öffnen des Werkzeugs in üblicher Weise mit einem Entnahmegreifer entnommen. Der Entnahmegreifer weist dabei eine Vielzahl von Entnahmehülsen auf, in denen der Preform meist bis zum Hals- oder Neckbereich eingeführt wird.

Sowohl die Spritzgießmaschinen mit Spritzgießwerkzeug wie auch die Entnahmeeinrichtungen sind aus dem Stand der Technik hinlänglich bekannt.

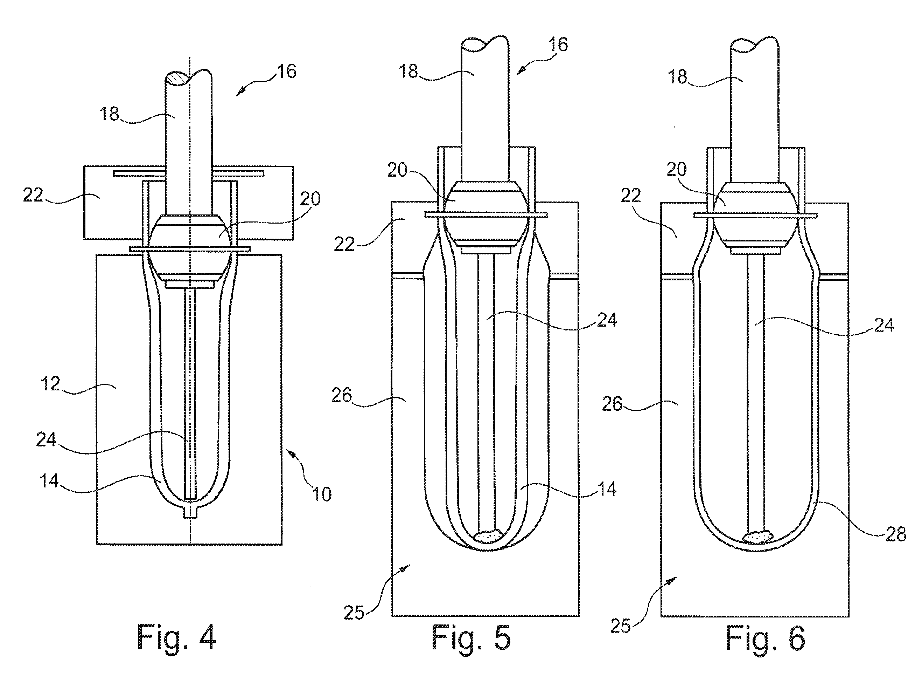

In Fig. 4 ist von einer solch bekannten Entnahmeeinrichtung 10 lediglich eine einzelne Entnahmehülse 12 aus einer Vielzahl von Entnahmehülsen dargestellt, um die Aufnahme des im vorherigen Schritt im Spritzgießwerkzeug hergestellten Preforms 14 zeigen zu können. Der zunächst hergestellte Preform 14 weist eine herkömmliche Form mit einer relativ dicken Wandstärke auf und ist in seinem Körperbereich fast vollständig in der Hülse aufgenommen, die (was vorliegend nicht näher dargestellt ist) wassergekühlt ist. Auf diese Kühlung, egal ob mit Luft oder Wasser, muss vorliegend nicht näher eingegangen werden, da sie ebenfalls aus dem Stand der Technik in vielfältigen Ausführungsvarianten bekannt ist.

In den in Fig. 4 dargestellten Preform eingeschoben ist das vordere Ende eines Transferpins eines Transfergreifers 16, wobei der Transfergreifer 16 eine der Anzahl der Entnahmehülsen 12 entsprechende Anzahl von Transferpins 18 aufweist. Am vorderen Ende des Transferpins ist eine elastische Dichteinrichtung vorgesehen, die sich durch Kompression in ihrer Radialdimension verändern (verbreitern) lässt. Insbesondere wird ein Schaft (nicht dargestellt) des Transferpins nach vorne geschoben, um die elastische Manschette zu komprimieren und radial nach außen zu drücken, wodurch sie sich an die Innenwand des Preforms anlagert und den Innenraum des Preforms zum einen gegenüber der Außenumgebung abdichtet und zum anderen hält. Diese Anlagerung erfolgt insbesondere im Bereich des Neckrings, wo eine besondere Stabilität gegeben ist.

Vom vorderen Ende des Transferpins 18 erstreckt sich bei diesem Ausführungsbeispiel eine Reckstange 24 in den domförmigen, geschlossenen Bereich des Preforms. Über diese Reckstange 24 kann nun Luft unter Druck dem Innenraum des Preforms zugeführt werden. Gemäß einer besonderen Ausführungsform kann auch die Reckstange selbst als eine Art Stempel ausgebildet sein und den Bodenbereich den Preforms durch Aufbringen eines stempelartigen Druckes verformen. Natürlich kann auch beide Varianten - Stempel und Luftdruck - kombiniert werden.

Durch den Aufbau eines Überdrucks im Bereich von 0,5 - 8 bar wird der Preform mit seinen Außenwänden gegen die Innenwand der als Kühlhülse wirkenden Entnahmehülse 12 gedrückt, so dass eine besonders gute Temperierung und Rekalibrierung stattfindet.

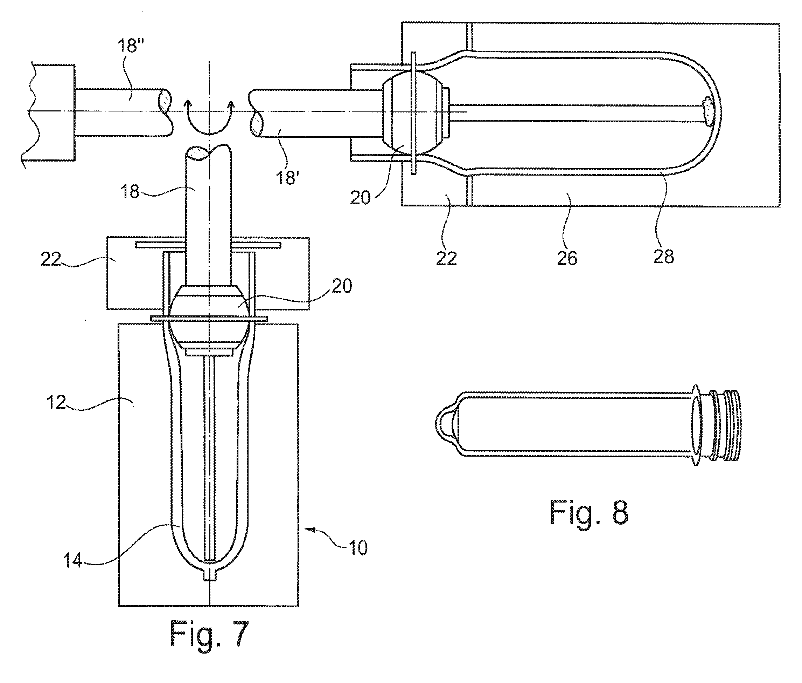

Ist die Kavität des Entnahmegreifers entsprechend ausgestaltet, kann in dieser Position bereits der Bodenbereich ausgeblasen werden, solange dabei keine Hinterschnitte entstehen und der Preform in einer sicheren Kontur gehalten wird. Damit können unter anderem Preformkonturen mit einem sog. Capello-Design erzeugt werden, wie dies in Fig. 8 dargestellt ist.

Überdies sind an jedem Transferpin 18 des Transfergreifers 16 vorliegend zweiteilige Backen 22 angeordnet, wobei die beiden Backenelemente radial auseinander und zueinander verfahren werden können. Die für die Bewegung der Backen notwendige Mimik und Einrichtung ist in den Figuren nicht dargestellt. In Fig. 4 sind die beiden Backenelemente radial nach außen verfahren. Werden diese Backenelemente radial nach innen verfahren, so umgeben sie den Hals- oder Neckbereich des Preforms (oder zumindest Teile davon) formschlüssig, wie später anhand von Fig. 5 noch dargestellt werden kann.

Die Entnahmevorrichtung 10 mit den Entnahmehülsen 12 dient somit nicht nur zur Entnahme der Preforms aus dem Spritzgießwerkzeug, sondern auch zur Vorkonditionierung auf eine bestimmte Temperatur, beispielsweise 120°. In diesem Temperaturbereich wird die Kristallisationsgefahr bereits signifikant reduziert, jedoch weiterhin eine Plastizität des Preforms aufrecht erhalten, unter der der Preform verformt werden kann. Da die Konditionierung auf einen Temperaturbereich von beispielsweise 120° C erfolgt - und nicht auf eine niedrigere Temperatur -, ist eine kürzere Verweilzeit als bisher in dem Entnahmegreifer möglich, was insgesamt zur Zykluszeitverkürzung beitragen kann. Diese Vorkonditionierung stellt auch einen ersten Unterschied im Vergleich zu den bisher bekannten Arbeits- und Prozessschritten der bestmöglichen Kühlung dar.

Dabei ist anzumerken, dass für den Fall, die Preformen lediglich in den Entnahmehülsen und nicht noch später in der Nachkühleinrichtung aufzublasen, durchaus eine üblich starke Kühlung in den Entnahmegreifern, anstelle einer Konditionierung, erfolgen kann.

Nach dem Erreichen der Konditionierungstemperatur wird der Preform 14 mittels des Transferpins 18 aus der Entnahmehülse 12 entnommen und, wie in Fig. 7 dargestellt ist, durch Verschwenken in eine Nachkühleinrichtung (Kühlblock) 25 eingeführt. Der Zustand nach dem unmittelbaren Einführen des Preforms 14 in die Kavität der als Blasformvorrichtung 26 dienenden Nachkühleinrichtung 25 ist in Fig. 5 dargestellt. Dabei sind die beiden Backen 22 der jeweiligen Backenvorrichtung eines Transferpins 18 bereits geschlossen, um die Kräfte des Blasens aufnehmen zu können, und umgeben den Halsbereich sowie den Neckring in dem Bereich in dem keine Verformung stattfinden soll im Wesentlichen vollständig. In dem Bereich, in dem Hals- oder Neckbereich von den Backen 22 umgeben wird, wird der Preform von außen abgestützt und kann sich in seiner Dimension nicht verändern. Überdies kann die Backenvorrichtung mit der Blasformvorrichtung 26 koppeln, so dass bis auf die obige Öffnung in der Backenvorrichtung eine vollständig abgeschlossene Kavität entsteht. Dabei sind die Backen vorliegend wassergekühlt (nicht dargestellt), um so eine möglichst schnelle Wärmeentnahme aus dem Preformbereich mit dicker Wandstärke zu gewährleisten.

Nunmehr wird der noch warme und verformbare Preform durch nochmaliges Einbringen von Luft mit einem entsprechenden Luftdruck von 0,5 - 8 bar aufgeblasen, so dass sich die Preformwandung ausdehnt und an die Innenseite der vergrößert ausgebildeten Nachkühleinrichtung anlegt. Das Ergebnis ist in Fig. 6 zu erkennen, wobei überdies zu erkennen ist, dass sich die Preformwand des Preforms 28 nun erheblich reduziert hat.

Da die Nachkühleinrichtung entsprechend aggressiv gekühlt wird (beispielsweise über Wasserkühlung - nicht dargestellt), kann der Preform 28 recht schnell auf eine gewünschte und für die spätere Verpackung akzeptable Temperatur gebracht werden, da nunmehr eine sehr viel dünnere Wandstärke vorliegt. Nach einer ausreichenden Kühlung wird der auf- und vorgeblasene Preform 28 aus der Blasform der Nachkühleinrichtung entnommen, wobei in Fig. 6 zu erkennen ist, dass diese Entnahme im Schulterbereich unproblematisch ist, da die Backen 22 den Hinterschnitt abdecken und sich durch die Zweiteilung öffnen lassen. Aufgrund der geringeren Wanddicke besteht auch eine geringere Gefahr der Wiederaufwärmung des Preforms 28 nach der Entnahme aus dem gekühlten Bereich.

Nach dem Öffnen der Backenelemente und dem Entspannen der elastischen Greif- und Dichteinrichtung 20 kann der Transferpin 18 aus dem Preform 28 herausgezogen werden, wobei der Preform 28 selbst noch in der Nachkühleinrichtung verbleibt und dort weiter gekühlt wird. Nach einem ausreichenden Kühlvorgang kann der Preform 28 dann über ein Transportband verfahren und durch einen entsprechenden Luftimpuls über nicht dargestellte Luftzuführungen auf ein Transportband ausgeworfen werden.

Wie in Fig. 2 dargestellt, können bei einer entsprechenden Ausbildung der Kavitätswände entweder in der Entnahmehülse oder in der Nachkühleinrichtung beim Aufblasen auch Strukturen in die Außenoberfläche des Preforms 2 eingebracht werden.

Da die voraufgeblasenen Preforms 28 in ihrer Dimension nun größer sind als die ursprünglichen Preforms, können in der als Blasvorrichtung 26 ausgebildeten Nachkühleinrichtung 25 nicht mehr die gleiche Anzahl von Preforms 28 wie bisher aufgenommen werden. Aus diesem Grunde kann es bei einer entsprechenden Leistungsfähigkeit der Maschine notwendig sein, zwei identische Nachkühleinrichtungen 25, beispielsweise oben seitlich der Maschine anzuordnen, und die aus der Entnahmevorrichtung stammenden Preform-Chargen abwechselnd in die eine und die andere Nachkühleinrichtung überzuführen. Dies ist in Fig. 7 schematisch dargestellt, wobei nur eine Entnahmehülse 12 dargestellt ist, von wo aus die Preform-Chargen abwechselnd in die Blasform nach rechts und in die nur ansatzweise Nachkühleinrichtung nach links (nur angedeutet) verschwenkt werden. In der jeweiligen Position ist dann auch der Transferpin (dann Bezugszahlen 18', 18") - hier ohne Reckstange - verschwenkt. Natürlich ist es auch vorteilhaft, wenn jede Nachkühleinrichtung 25 zwei oder mehr Chargen von Preforms aufnehmen kann. Dafür muss aber die Anordnung der Formnester sowohl im Werkzeug als auch im Entnahmegreifer und im Transfergreifer entsprechend abgestimmt sein.

Mit der vorliegenden Erfindung ist es auf einfache Art und Weise möglich, Preforms mit Spezialgeometrien, beispielsweise einem Hinterschnitt im Schulterbereich oder einem Capello-Design, zu generieren, die sowohl bei der eigenen Produktion wie auch bei dem nachfolgenden Aufblasvorgang viele Vorteile aufweisen.

### Bezugszeichen liste

- 1: Dickwandiger Preform
- 2: Dünnwandiger Preform mit Hinterschnitt (erste Geometrie)
- 3: Dünnwandiger Preform mit Hinterschnitt (zweite Geometrie)
- 4: Oberflächenstruktur
- 10: Entnahmegreifer
- 12: Entnahmehülse
- 14: Preform mit Geometrie aus dem Werkzeug
- 16: Transfergreifer
- 18,: Transferpin
- 18',:
- 18":
- 20: Greif- und Dichtvorrichtung
- 22: Backen bzw. Formbacken
- 24: Reckstange
- 25: Kühlblock
- 26: Blasform
- 28: Preform-Geometrie mit Hinterschnitt
- 30: Preform mit einem Capello-Design

## Patentansprüche

1. Verfahren zur Herstellung von Preformen
wobei
- in ein Spritzgießwerkzeug, dessen Kavitätsgeometrien der Formnester derart ausgestaltet sind, dass die radiale Erstreckung des Innenraums im damit hergestellten Preformkörper nicht größer ist als die radiale Erstreckung des Innenraums im Halsbereich, Preformen (14) durch Einspritzen einer Kunststoffschmelze hergestellt werden,
- das Spritzgießwerkzeug nach einem ersten Abkühlschritt geöffnet wird,
- die Preformen (14) mit einem Entnahmegreifer (10) aus dem offenen Werkzeug entnommen werden,
- Transferpins (18) eines Transfergreifers (16) in den zugehörigen Innenraum eines Preforms eingebracht werden und
- die Preformen mittels des Transfergreifers (16) aus dem Entnahmegreifer (10) entnommen und in eine Nachkühleinrichtung (25) umgesetzt werden,
- **dadurch gekennzeichnet, dass**
die Preformen (14) entweder im Entnahmegreifer (10) und/oder in der Nachkühleinrichtung (25) unter Verwendung von Überdruck gegenüber der im Spritzgießwerkzeug befindlichen Kavität aufgeblasen und mit ihrer Wand an die Wände einer vergrößerten Kavität im Entnahmegreifer (10) oder der Nachkühleinrichtung (25) angelagert werden, wobei voraufgeblasene Preformen (28) mit einer gegenüber der Kavität des Spritzgießwerkzeugs geänderten, vergrößerten Geometrie hergestellt werden, und dass die voraufgeblasenen Preformen (28) nach einer ausreichenden Kühlung aus der Nachkühleinrichtung (25) entnommen werden und Preformen mit einer Spezialgeometrie vorliegen, wobei der fertig hergestellte Preform (28) einen Halsbereich mit Gewinde oder einer Verschlusseinrichtung und einen an den Halsbereich anschließenden Preformkörper mit einer gegenüber der Kavität des Spritzgießwerkzeugs geänderten, vergrößerten Geometrie aufweist.

2. Verfahren nach Anspruch 1,
**dadurch gekennzeichnet, dass**
- die Preformen mittels des Transfergreifers (16) aus dem Entnahmegreifer (10) entnommen und in die Nachkühleinrichtung (25) mit einer gegenüber dem Preform radial und/oder axial vergrößerten Kavität umgesetzt werden, und
- die Preforms unter Verwendung von Überdruck aufgeblasen und mit ihrer Wand an die vergrößerten Kavitätswände der Blasformeinrichtung (26) angelagert werden, wobei die radiale Erstreckung des freien Innenraums im aufgeblasenen Preformkörper größer geblasen wird, als die radiale Erstreckung des freien Innenraums im Halsbereich.

3. Verfahren nach Anspruch 1 oder 2,
**dadurch gekennzeichnet,**
**dass** bei einem Blasvorgang im Entnahmegreifer (10) der Bodenbereich der Preformen (14) aufgeblasen wird.

4. Verfahren nach Anspruch 1,
**dadurch gekennzeichnet,**
**dass** der Bodenbereich der Preformen (14) in axialer Erstreckung aufgeblasen wird und dass der radiale Außenumfang der Preformen (14) konstant gehalten wird.

5. Verfahren nach einem der Ansprüche 1 bis 4,
**dadurch gekennzeichnet,**
**dass** die Entnahmehülse (12) des Entnahmegreifers (10) temperiert wird.

6. Verfahren nach Anspruch 5,
**dadurch gekennzeichnet,**
**dass** die Temperierung im Entnahmegreifer (10) zum Konditionieren des Preforms dient.

7. Verfahren nach Anspruch 6,
**dadurch gekennzeichnet,**
**dass** eine Konditionierung im Temperaturbereich zwischen 90° und 150° erfolgt.

8. Verfahren nach einem der Ansprüche 1 bis 7,
**dadurch gekennzeichnet,**
**dass** bei der Ausbildung des Überdruckes während der Aufnahme des Preforms im Entnahmegreifer (10) oder der Nachkühleinrichtung (25), der Halsbereich des Preforms von außen abgestützt wird.

9. Verfahren nach Anspruch 8,
**dadurch gekennzeichnet,**
**dass** sich an die Abstützung des Preforms im Halsbereich unmittelbar die Entnahmehülse (12) des Entnahmegreifers (10) oder die Nachkühleinrichtung (25) anschließt, derart, dass der Preform vollumfänglich abgestützt wird.

10. Verfahren nach einem der vorhergehenden Ansprüche,
**dadurch gekennzeichnet,**
**dass** auch bei einer Kavität in den Entnahmehülsen (12) des Entnahmegreifers (11), die der Kavität im Spritzgießwerkzeug entspricht auch während der Aufnahme des Preforms in der Entnahmehülse (12) mittels des Transfergreifers (16) ein Überdruck im Preforminnenraum zumindest zeitweise aufgebaut wird.

11. Verfahren nach einem der vorhergehenden Ansprüche,
**dadurch gekennzeichnet,**
**dass** der Überdruck während der Konditionierung oder während des Aufblasvorganges im Bereich zwischen 0,5 und 8 bar gehalten wird.

12. Verfahren nach einem der vorhergehenden Ansprüche,
**dadurch gekennzeichnet,**
**dass** die Preformen aus dem Entnahmegreifer (10) abwechselnd in zwei verschiedene Nachkühleinrichtungen (25) überführt werden.

13. Vorrichtung zur Herstellung von Preformen,
wobei
- ein Spritzgießwerkzeug mit einer Anzahl von Formnestern für die Ausbildung von Preform-Geometrien vorgesehen ist, wobei die einzelnen Formnestgeometrien derart in ihrer Kavität ausgestaltet sind, dass die radiale Erstreckung des freien Innenraums im Preformkörper nicht größer ist als die radiale Erstreckung des freien Innenraums im Halsbereich,
- eine Plastifizier- und Einspritzeinrichtung vorgesehen ist, um ein Kunststoffmaterial aufzuschmelzen und in die Kavität des geschlossenen Spritzgießwerkzeugs einzubringen,
- ein Entnahmegreifer (10) mit einer der Anzahl von Entnahmehülsen (12) vorgesehen ist, die jeweils zur Aufnahme von im Spritzgießwerkzeug ausgebildeten Preformen (14) ausgebildet sind,
- ein Transfergreifer (16) mit einer der Anzahl der Entnahmehülsen (12) entsprechenden Anzahl von Transferpins (18) vorgesehen ist, die jeweils in einen zugeordneten Preform einbringbar sind,
- eine Nachkühlrichtung (25) mit einer Anzahl Kavitäten vorgesehen ist,
- der Transfergreifer (16) zum Umsetzen einer Charge von Preforms vom Entnahmegreifer (10) zur Nachkühleinrichtung (25) ausgebildet ist und
die Transferpins (18) des Transfergreifers (16) eine Abdichteinrichtung (20) zur Abdichtung eines Preform-Innenraums und eine Fluidausbringeinrichtung zum Einbringen von Fluid in den Preform-Innenraum aufweisen,
**dadurch gekennzeichnet,**
**dass** die Kavitäten der Entnahmehülsen (12) des Entnahmegreifers (10) und/oder die Kavitäten der Nachkühleinrichtung (25) gegenüber der im Spritzgießwerkzeug realisierten Kavität radial und/oder axial vergrößert sind, wodurch Preformen mit einer Spezialgeometrie herstellbar sind, wobei der fertig hergestellte Preform (28) einen Halsbereich mit Gewinde oder einer Schlusseinrichtung und einen an den Halsbereich anschließenden Preformkörper mit einem gegenüber der Kavität des Spritzgießwerkzeuges geänderten, vergrößerten Geometrie aufweist,.

14. Vorrichtung nach Anspruch 13,
**dadurch gekennzeichnet,**
**dass** die Kavitäten im Entnahmegreifer (10) in einem Bodenbereich des Preforms (14) gegenüber den Kavitäten im Spritzgießwerkzeug vergrößert sind.

15. Vorrichtung nach Anspruch 13 oder 14,
**dadurch gekennzeichnet,**
**dass** die Kavitäten in der Nachkühleinrichtung (25) gegenüber den Kavitäten im Spritzgießwerkzeug derart vergrößert sind, dass die radiale Erstreckung des freien Innenraums im aufgeblasenen Preformkörper größer ist, als die radiale Erstreckung des freien Innenraums im Halsbereich.

16. Vorrichtung nach einem der Ansprüche 13 bis 15,
**dadurch gekennzeichnet,**
**dass** die Entnahmehülsen (12) temperierbar ausgebildet sind.

17. Vorrichtung nach einem der Ansprüche 13 bis 16,
**dadurch gekennzeichnet,**
**dass** die Nachkühleinrichtung (25) wassergekühlt ist.

18. Vorrichtung nach einem der Ansprüche 13 bis 17,
**dadurch gekennzeichnet,**
**dass** für jeden Transferpin (18) am Transfergreifer (16) eine Backenvorrichtung mit zumindest zwei Backen (22) vorgesehen ist, die sich zumindest radial öffnen und um zumindest einen Teil des Halsbereichs des zugeordneten Preforms schließen lassen.

19. Vorrichtung nach Anspruch 18,
**dadurch gekennzeichnet,**
**dass** die Backenvorrichtung derart ausgebildet ist, um mit einer zugeordneten Nachkühleinrichtung (25) derart gekoppelt zu werden, dass eine einheitliche Blasform (26) entsteht, welche den Preform vollumfänglich bis in den Halsbereich umgibt.

20. Vorrichtung nach einem der Ansprüche 13 bis 19,
**dadurch gekennzeichnet,**
**dass** zwei identische Nachkühleinrichtungen (25) vorgesehen sind, in die die Preformen aus dem Entnahmegreifer (10) abwechselnd umgesetzt werden.

21. Vorrichtung nach einem der Ansprüche 13 bis 20,
**dadurch gekennzeichnet,**
**dass** die Anzahl der Kavitäten in der Nachkühleinrichtung (25) dem Zwei-, Drei- oder Mehrfachen der Anzahl der Entnahmehülsen (12) entspricht.

22. Vorrichtung nach einem der Ansprüche 13 bis 21,
**dadurch gekennzeichnet,**
**dass** die Transferpins (18) jeweils eine Reckstange (24) aufweisen.

23. Vorrichtung nach einem der vorhergehenden Ansprüche 13 bis 22,
**dadurch gekennzeichnet,**
**dass** die Kavitätswände der Nachkühleinrichtung (25) und/oder der Entnahmehülsen (12) eine Oberflächenstruktur (4) besitzen.

## Claims

1. A method for producing preforms
wherein
- preforms (14) are produced by injecting a plastic melt into an injection mould, the cavity geometries of the impressions of which are configured such that the radial extent of the inner space in the preform body which is thus produced is not greater than the radial extent of the inner space in the neck region,
- the injection mould is opened after a first cooling step,
- the preforms (14) are removed from the open mould with a removal gripper (10),
- transfer pins (18) of a transfer gripper (16) are introduced into the associated inner space of a preform and
- the preforms are removed from the removal gripper (10) by means of the transfer gripper (16) and are transferred into an after-cooling device (25),
- **characterized in that**
the preforms (14) either in the removal gripper (10) and/or in the after-cooling device (25) are inflated with respect to the cavity situated in the injection mould, using positive pressure, and with their wall are seated against the walls of an enlarged cavity in the removal gripper (10) or after-cooling device (25), wherein pre-inflated preforms (28) with an enlarged geometry, altered with respect to the cavity of the injection mould, are produced, and that the pre-inflated preforms (28), after a sufficient cooling, are removed from the after-cooling device (25) and preforms with a special geometry are present, wherein the finished produced preform (28) has a neck region with a thread or a closure arrangement and a preform body, adjoining the neck region, with an enlarged geometry, altered with respect to the cavity of the injection mould.

2. The method according to claim 1,
**characterized in that**
- the preforms are removed from the removal gripper (10) by means of the transfer gripper (16) and are transferred into the after-cooling device (25) with a radially and/or axially enlarged cavity with respect to the preform, and
- the preforms are inflated using positive pressure and are seated with their wall against the enlarged cavity walls of the blow mould (26), wherein the radial extent of the free inner space in the inflated preform body is blown greater than the radial extent of the free inner space in the neck region.

3. The method according to claim 1 or 2,
**characterized in that**
in the case of a blowing process in the removal gripper (10) the base region of the preforms (14) is inflated.

4. The method according to claim 1,
**characterized in that**
the base region of the preforms (14) is inflated in axial extent and that the radial outer circumference of the preforms (14) is kept constant.

5. The method according to one of claims 1 to 4,
**characterized in that**
the removal sleeve (12) of the removal gripper (10) is tempered.

6. The method according to claim 5,
**characterized in that**
the tempering in the removal gripper (10) serves for the conditioning of the preform.

7. The method according to claim 6,
**characterized in that**
a conditioning takes place in the temperature range between 90° and 150°.

8. The method according to one of claims 1 to 7,
**characterized in that**
in the forming of the positive pressure during the receiving of the preform in the removal gripper (10) or the after-cooling device (25), the neck region of the preform is supported from the exterior.

9. The method according to claim 8,
**characterized in that**
the removal sleeve (12) of the removal gripper (10) or the after-cooling device (25) immediately adjoins the support of the preform in the neck region, such that the preform is supported fully circumferentially.

10. The method according to one of the preceding claims,
**characterized in that**
also in the case of a cavity in the removal sleeves (12) of the removal gripper (11), which corresponds to the cavity in the injection mould, also during the receiving of the preform in the removal sleeve (12) by means of the transfer gripper (16) a positive pressure is built up at least temporarily in the preform inner space.

11. The method according to one of the preceding claims,
**characterized in that**
the positive pressure during the conditioning or during the inflation process is kept in the range between 0.5 and 8 bar.

12. The method according to one of the preceding claims,
**characterized in that**
the preforms are transferred from the removal gripper (10) alternately into two different after-cooling devices (25).

13. A device for producing preforms,
wherein
- an injection mould with a number of impressions for the formation of preform geometries is provided, wherein the individual impression geometries are configured in their cavity such that the radial extent of the free inner space in the preform body is not greater than the radial extent of the free inner space in the neck region,
- a plasticizing- and injecting device is provided, in order to melt a plastic material and introduce it into the cavity of the closed injection mould,
- a removal gripper (10) with a number of removal sleeves (12) is provided, which are respectively constructed for the receiving of preforms (14) formed in the injection mould,
- a transfer gripper (16) is provided with a number of transfer pins (18) corresponding to the number of removal sleeves (12), which are able to be introduced respectively into an associated preform,
- an after-cooling device (25) is provided with a number of cavities,
- the transfer gripper (16) is constructed for transferring a charge of preforms from the removal gripper (10) to the after-cooling device (25) and
the transfer pins (18) of the transfer gripper (16) have a sealing device (20) for sealing a preform inner space and a fluid production device for the introduction of fluid into the preform inner space,
**characterized in that**
the cavities of the removal sleeves (12) of the removal gripper (10) and/or the cavities of the after-cooling device (25) are enlarged radially and/or axially with respect to the cavity realized in the injection mould, whereby preforms with a special geometry are able to be produced, wherein the finished produced preform (28) has a neck region with a thread or a closure arrangement and a preform body, adjoining the neck region, with an enlarged geometry, altered with respect to the cavity of the injection mould.

14. The device according to claim 13,
**characterized in that**
the cavities in the removal gripper (10) in a base region of the preform (14) are enlarged with respect to the cavities in the injection mould.

15. The device according to claim 13 or 14,
**characterized in that**
the cavities in the after-cooling device (25) are enlarged with respect to the cavities in the injection mould such that the radial extent of the free inner space in the inflated preform body is greater than the radial extent of the free inner space in the neck region.

16. The device according to one of claims 13 to 15,
**characterized in that**
the removal sleeves (12) are constructed so as to be able to be tempered.

17. The device according to one of claims 13 to 16,
**characterized in that**
the after-cooling device (25) is water-cooled.

18. The device according to one of claims 13 to 17,
**characterized in that**
for each transfer pin (18) on the transfer gripper (16) a jaw device with at least two jaws (22) is provided, which can be opened at least radially and closed around at least a portion of the neck region of the associated preform.

19. The device according to claim 18,
**characterized in that**
the jaw device is constructed in such a way, in order to be coupled with an associated after-cooling device (25) such that a uniform blow mould (26) is produced, which surrounds the preform fully circumferentially up to the neck region.

20. The device according to one of claims 13 to 19,
**characterized in that**
two identical after-cooling devices (25) are provided, into which the preforms are transferred alternately from the removal gripper (10).

21. The device according to one of claims 13 to 20,
**characterized in that**
the number of cavities in the after-cooling device (25) corresponds to double, triple or a multiple of the number of the removal sleeves (12).

22. The device according to one of claims 13 to 21,
**characterized in that**
the transfer pins (18) have respectively a stretching rod (24).

23. The device according to one of the preceding claims 13 to 22,
**characterized in that**
the cavity walls of the after-cooling device (25) and/or of the removal sleeves (12) have a surface structure (4).

## Revendications

1. Procédé de fabrication de préformes,
dans lequel
- des préformes (14) sont fabriquées par injection d'une fonte plastique dans un outil de moulage par injection dont les géométries des cavités de moule sont ainsi formées que l'allongement radial de l'intérieur du corps de préforme fabriqué avec n'est pas supérieur à l'allongement radial de l'intérieur de la partie de col,
- l'outil de moulage par injection est ouvert après une première étape de refroidissement,
- les préformes (14) sont prélevées de l'outil ouvert par un grappin de prélèvement (10),
- des broches de transfert (18) d'un grappin de transfert (16) sont intégrées dans l'intérieur correspondant d'une préforme et
- les préformes sont prélevées du grappin de prélèvement (10) au moyen du grappin de transfert (16) et transférés dans un dispositif de post-refroidissement (25),
- **caractérisé en ce que**
les préformes (14) sont soufflées soit dans le grappin de prélèvement (10) et/ou dans le dispositif de post-refroidissement (25) en employant de la surpression par rapport à la cavité se trouvant dans l'outil de moulage par injection et sont placées avec leur paroi contre les parois d'une cavité agrandie dans le grappin de prélèvement (10) ou le dispositif de post-refroidissement (25), sachant que des préformes pré-soufflées (28) sont fabriquées avec une géométrie agrandie, modifiée par rapport à la cavité de l'outil de moulage par injection et que les préformes pré-soufflées (28) sont prélevées du dispositif de post-refroidissement (25) après un refroidissement suffisant et les préformes présentent alors une géométrie spéciale, sachant que la préforme terminée (28) présente une partie de col avec filet ou un système de fermeture et un corps de préforme se rattachant à la partie de col avec une géométrie agrandie, modifiée par rapport à la cavité de l'outil de moulage par injection.

2. Procédé selon la revendication 1,
**caractérisé en ce que**
- les préformes sont prélevées du grappin de prélèvement (10) au moyen du grappin de transfert (16) et transférées dans le dispositif de post-refroidissement (25) avec une cavité radiale et/ou axiale agrandie par rapport à la préforme, et
- les préformes sont soufflées par l'emploi de surpression et sont placées avec leur paroi contre les parois agrandies d'une cavité du dispositif de moulage par soufflage (26), sachant que l'allongement radial de l'intérieur libre dans le corps de préforme soufflé est soufflé plus grand que l'allongement radial de l'intérieur libre dans la partie de col.

3. Procédé selon la revendication 1 ou 2,
**caractérisé en ce que**
le fond des préformes (14) est soufflé au cours d'une opération de soufflage dans le grappin de prélèvement (10).

4. Procédé selon la revendication 1,
**caractérisé en ce que**
le fond des préformes (14) est soufflé dans l'allongement axial et que le pourtour extérieur radial des préformes (14) est maintenu constant.

5. Procédé selon l'une des revendications 1 à 4,
**caractérisé en ce que**
le manchon de prélèvement (12) du grappin de prélèvement (10) est mis en température.

6. Procédé selon la revendication 5,
**caractérisé en ce que**
la mise en température dans le grappin de prélèvement (10) sert au conditionnement de la préforme.

7. Procédé selon la revendication 6,
**caractérisé en ce**
**qu'**un conditionnement a lieu dans une plage de températures entre 90° et 150°.

8. Procédé selon l'une des revendications 1 à 7,
**caractérisé en ce que**
lors de la formation de la surpression pendant la réception de la préforme dans le grappin de prélèvement (10) ou le dispositif de post-refroidissement (25), la partie de col de la préforme est soutenue par l'extérieur.

9. Procédé selon la revendication 8,
**caractérisé en ce que**
le manchon de prélèvement (12) du grappin de prélèvement (10) ou le dispositif de post-refroidissement (25) se raccorde directement au support de la préforme dans la partie de col, de telle sorte que la préforme est soutenue sur tout son pourtour.

10. Procédé selon l'une des revendications précédentes,
**caractérisé en ce que**
même avec une cavité dans les manchons de prélèvement (12) du grappin de prélèvement (10) qui correspond à la cavité dans l'outil de moulage par injection une surpression est également créée au moins temporairement à l'intérieur de la préforme pendant la réception de la préforme dans le manchon de prélèvement (12) au moyen du grappin de transfert (16).

11. Procédé selon l'une des revendications précédentes,
**caractérisé en ce que**
la surpression pendant le conditionnement ou pendant l'opération de soufflage, est maintenue dans la plage de 0,5 à 8 bar.

12. Procédé selon l'une des revendications précédentes,
**caractérisé en ce que**
les préformes hors du grappin de prélèvement (10) sont transmises alternativement dans deux dispositifs de post-refroidissement (25) différents.

13. Procédé de fabrication de préformes,
dans lequel
- un outil de moulage par injection comprenant une pluralité de cavités de moule pour la formation de géométries de préforme est prévu, sachant que les différentes géométries de cavité de moule sont ainsi formées dans leur cavité que l'allongement radial de l'intérieur libre dans le corps de préforme n'est pas plus grand que l'allongement radial de l'intérieur libre dans la partie de col,
- un dispositif de plastification et d'injection est prévu pour fondre un matériau plastique et l'amener dans la cavité de l'outil de moulage par injection fermé,
- un grappin de prélèvement (10) comprenant un nombre de manchons de prélèvement (12) est prévu, qui sont formés respectivement pour recevoir des préformes (14) formées dans l'outil de moulage par injection,
- un grappin de transfert (16) comprenant un nombre de broches de transfert (18) correspondant au nombre de manchons de prélèvement (12) est prévu, lesquelles peuvent être insérées dans une préforme attribuée,
- un dispositif de post-refroidissement (25) comprenant un nombre de cavités est prévu,
- le grappin de transfert (16) est formé pour transférer un chargement de préformes du grappin de prélèvement (10) au dispositif de post-refroidissement (25) et
- les broches de transfert (18) du grappin de transfert (16) présentent un dispositif d'étanchéité (20) pour étanchéifier un espace intérieur de préforme, et un dispositif d'apport de fluide pour apporter du fluide dans l'intérieur de préforme,
**caractérisé en ce que** #
les cavités des manchons de prélèvement (12) du grappin de prélèvement (10) et/ou les cavités du dispositif de post-refroidissement (25) sont agrandies radialement et/ou axialement par rapport à la cavité réalisée dans l'outil de moulage par injection, ce par quoi des préformes avec une géométrie spéciale peuvent être fabriquées, sachant que la préforme fabriquée (28) présente une partie de col avec filet ou un système de fermeture et un corps de préforme se rattachant à la partie de col avec une géométrie agrandie, modifiée par rapport à la cavité de l'outil de moulage par injection.

14. Dispositif selon la revendication 13,
**caractérisé en ce que**
les cavités dans le grappin de prélèvement (10) sont agrandies dans un fond de la préforme (14) par rapport aux cavités dans l'outil de moulage par injection.

15. Dispositif selon la revendication 13 ou 14,
**caractérisé en ce que**
les cavités dans le dispositif de post-refroidissement (25) sont ainsi agrandies par rapport aux cavités dans l'outil de moulage par injection que l'allongement radial de l'intérieur libre dans le corps de préforme soufflé est plus grand que l'allongement radial de l'intérieur libre dans la partie de col.

16. Dispositif selon l'une des revendications 13 à 15,
**caractérisé en ce que**
les manchons de prélèvement (12) sont conçus en pouvant être mis en température.

17. Dispositif selon l'une des revendications 13 à 16, **caractérisé en ce que**
le dispositif de post-refroidissement (25) est refroidi par eau.

18. Dispositif selon l'une des revendications 13 à 17,
**caractérisé en ce que**
pour chaque broche de transfert (18) sur le grappin de transfert (16), un dispositif de mâchoires comprenant au moins deux mâchoires (22) est prévu, lesquelles s'ouvrent au moins radialement et peuvent se fermer autour d'au moins une partie du col de la préforme attribuée.

19. Dispositif selon la revendication 18,
**caractérisé en ce que**
le dispositif de mâchoires est conçu pour être couplé de telle sorte à un dispositif de post-refroidissement (25) attribué qu'un moule de soufflage unique (26) est produit, lequel entoure tout le pourtour de la préforme jusque dans la partie de col.

20. Dispositif selon l'une des revendications 13 à 19,
**caractérisé en ce que**
deux dispositifs de post-refroidissement (25) identiques sont prévus, dans lesquels les préformes peuvent être transférées alternativement du grappin de prélèvement (10).

21. Dispositif selon l'une des revendications 13 à 20,
**caractérisé en ce que**
le nombre des cavités dans le dispositif de post-refroidissement (25) correspond à deux, trois fois ou plusieurs fois le nombre des manchons de prélèvement (12).

22. Dispositif selon l'une des revendications 13 à 21,
**caractérisé en ce que**
les broches de transfert (18) présentent respectivement une barre d'étirage (24).

23. Dispositif selon l'une des revendications précédentes 13 à 22,
**caractérisé en ce que**
les parois de cavité du dispositif de post-refroidissement (25) et/ou des manchons de prélèvement (12) possèdent une structure de surface (4).
